(19) Europäisches Patentamt
European Patent Office
Office européen des brevets

(11) **EP 1 657 401 B1**

(12) **EUROPÄISCHE PATENTSCHRIFT**

(45) Veröffentlichungstag und Bekanntmachung des Hinweises auf die Patenterteilung:
**09.04.2014 Patentblatt 2014/15**

(51) Int Cl.:
***F01D 5/14*** *(2006.01)*

(21) Anmeldenummer: **05024869.9**

(22) Anmeldetag: **14.11.2005**

(54) **Strömungsarbeitsmaschine mit Schaufeln mit erweiterter Randprofiltiefe**

Turbomachine comprising blades with an extended profile chord length in its tip region

Turbomachine comprenant des aubes avec une augmentation de la longueur des chordes du profil dans l'extrémité de l'aube

(84) Benannte Vertragsstaaten:
**DE FR GB**

(30) Priorität: **12.11.2004 DE 102004054752**

(43) Veröffentlichungstag der Anmeldung:
**17.05.2006 Patentblatt 2006/20**

(73) Patentinhaber: **Rolls-Royce Deutschland Ltd & Co KG**
**15827 Dahlewitz (DE)**

(72) Erfinder: **Gümmer, Volker**
**15831 Mahlow (DE)**

(74) Vertreter: **Weber, Joachim**
**Hoefer & Partner**
**Patentanwälte**
**Pilgersheimer Strasse 20**
**81543 München (DE)**

(56) Entgegenhaltungen:
**EP-A- 0 833 060       FR-A- 2 053 049**
**JP-A- 56 069 405       US-A- 6 109 869**
**US-B1- 6 554 564**

EP 1 657 401 B1

**Beschreibung**

Die vorliegende Erfindung bezieht sich auf Schaufeln von Strömungsarbeitsmaschinen wie etwa Bläsern, Verdichtern, Pumpen und Ventilatoren in axialer, halbaxialer oder auch radialer Bauart. Das Arbeitsmedium (Fluid) kann gasförmig oder flüssig sein.

Im Einzelnen betrifft die Erfindung mindestens eine Strömungsarbeitsmaschine. Die betreffende Beschaufelung ist innerhalb eines Gehäuses, welches die Durchströmung eines Rotors und, falls vorhanden, eines Stators mit einem Fluid nach außen begrenzt. Während ein Rotor mehrere an einer rotierenden Welle befestigte Rotorschaufeln umfasst und Energie an das Arbeitsmedium abgibt, besteht ein Stator aus mehreren feststehenden, meist im Gehäuse befestigten Statorschaufeln. In besonderen Fällen, wie bei Propellern und Gebläsen, existiert kein Gehäuse.

Die aerodynamische Belastbarkeit und die Effizienz von Strömungsarbeitsmaschinen, beispielsweise Bläsern, Verdichtern, Pumpen und Ventilatoren, wird insbesondere durch das Wachstum und die Ablösung von Grenzschichten im Bereich von Rotor- und Statorradialspalten nahe der Ringkanalwände begrenzt. Der Stand der Technik hält für dieses fundamentale Problem nur bedingt Lösungen bereit. So wird der Beschaufelung beispielsweise durch eine besondere Gestalt der Schaufelfädelachse eine Biegung, eine Pfeilung oder eine V-Stellung aufgeprägt, um die Randzonenströmung positiv zu beeinflussen (siehe EP 0 661 413 A1, EP 1 106 835 A2, EP 1 106 836 A2). Auch sind Ansätze vorhanden, die Randströmung an den Enden von Schaufeln mit fester Wandanbindung durch lediglich sehr lokale Erweiterung der Profiltiefe zu verbessern (siehe EP 0 833 060 A2). Letzteres Konzept beschränkt sich zudem auf die gleiche maximale Profildicke der einzelnen Schaufelschnitte. Die bekannten Lösungen sind insbesondere für die Strömungsverhältnisse an einem Schaufelende mit Radialspalt, nicht genügend zielgerichtet und somit nur bedingt effektiv.

Als nachteilig erweist sich beim Stand der Technik, dass die entsprechenden Schaufelformen oft für das erreichbare Maß der Strömungsverbesserung sehr komplex beschaffen sein müssen und in Bezug auf die mechanische Festigkeit oft nur unter Inkaufnahme merklicher Kompromisse bezüglich der Profilgestalt in einer Maschine realisierbar sind. Auch wird durch eine auf die nah am Spalt liegenden Schaufelschnitte begrenzte Profiltiefenerweiterung, wie sie im Stand der Technik vorkommt, nicht das maximal mögliche Maß an Spaltströmungsbeeinflussung erzielt. Dies ist insbesondere auf eine ungünstige Verteilung der auf Vorder- und Hinterkante entfallenden Anteile der Profiltiefenerweiterung zurückzuführen. Es ist aber auch ganz wesentlich auf den knappen für die Profiltiefenerweiterung gewählten Bereich der Schaufelhöhe zurückzuführen. Ein weiter in den Bereich der Schaufelmitte reichender Auslauf der Profiltiefenerweiterung fehlt. Daher sind die mit dem Stand der Technik verbundenen Steigerungen bezüglich des Wirkungsgrades und der Stabilität der Strömungsarbeitsmaschine zwar vorhanden, aber vergleichsweise klein. Entsprechend klein ist demzufolge eine mögliche Reduzierung der Bauteilanzahl.

Die EP 0 833 060 A beschreibt die Schaufel einer Strömungsmaschine mit Profiltiefenerweiterungen an mindestens einer der vier Schaufelecken. Die Schaufel besitzt an jedem Schaufelende, fest oder frei, eine gegen die Mittelzone der Schaufel abgegrenzte Randzone mit den Eindringhöhen Lc und Lh. Die Schaufel ist somit in einen mittleren unberührten Bereich und zwei jeweils am Schaufelende vorgesehene Randbereiche gegliedert. Alle Ausführungen der beschriebenen Schaufel sind sowohl aerodynamisch wie strukturell als sehr ungünstig und in einer Maschine als nicht realisierbar einzustufen.

Die FR 2 053 049 A beschreibt die Schaufel einer Strömungsmaschine mit Profilen reduzierter Krümmung (Wölbung) in den Randzonen. Die Reduzierung der Profilwölbung im Randbereich führt dort zwangsläufig zu einer zusätzlichen Verwindung der Schaufel.

Der vorliegenden Erfindung liegt die Aufgabe zugrunde, eine Rotor- oder Statorschaufel der eingangs genannten Art zu schaffen, welche unter Vermeidung der Nachteile des Standes der Technik eine wirkungsvolle Beeinflussung der Radialspaltströmung erreicht

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist für den Einsatz in einer Strömungsarbeitsmaschine eine Rotor-oder Statorschaufel geschaffen, die bezogen auf ihren Basisbereich zum freien Schaufelende hin eine Erweiterung der Profiltiefe aufweist, unter der Maßgabe, dass

    i.) der Basisbereich durch den Mittelschnitt und einen bestimmten Teil des festen und einen bestimmten Teil des spaltangrenzenden Randprofilschnitts definiert ist,

    ii.) die Profiltiefenerweiterung im spaltangrenzenden Randschnitt mindestens 10 % beträgt und bei stets positiven Beträgen auf Null im Schaufelmittelschnitt zurückgeht, und

    iii.) die an der Hinterkante auftretende Profiltiefenerweiterung im spaltangrenzenden Randschnitt größer als Null ist.

Erfindungsgemäß ist somit vorgesehen, dass sich die Profiltiefe der Schaufel über den Basisbereich hinaus ändert. Diese Änderung führt zu einer Änderung der in der jeweiligen Schnittebene (Stromlinienprofilschnitt) wirksamen Axiallänge. Es ergibt sich somit eine räumliche Ausgestaltung der Vorder- und der Hinterkante der Schaufel.

Unter Erweiterung der Profiltiefe ist erfindungsgemäß sowohl eine Vergrößerung oder Erhöhung der Profiltiefe am freien Schaufelende zu verstehen, kann aber lokal in der Schaufelhälfte des festen Schaufelendes auch bei negativen Werten, eine Verkürzung bedeuten.

Im Folgenden wird die Erfindung anhand von Ausführungsbeispielen in Verbindung mit den Figuren beschrieben. Dabei zeigt:

Fig. 1: eine schematische Darstellung erfindungsrelevanter Schaufelkonfigurationen,

Fig. 2: eine Skizze zum Stand der Technik und erfindungsgemäßen Lösungen am Beispiel eines Rotors,

Fig. 3: die Definition von Meridianstromlinien,

Fig. 4: die Definition und vereinfachte Darstellung eines Stromlinienprofilschnitts,

Fig. 5a: die erfindungsgemäße Lösung am Rotor, Meridanansicht,

Fig. 5b: die erfindungsgemäße Lösung am Rotor, Ansicht A-A aus Fig.5a,

Fig. 6a: die erfindungsgemäße Lösung am Stator, Meridanansicht,

Fig. 6b: die erfindungsgemäße Lösung am Stator, Ansicht A-A aus Fig.6a.

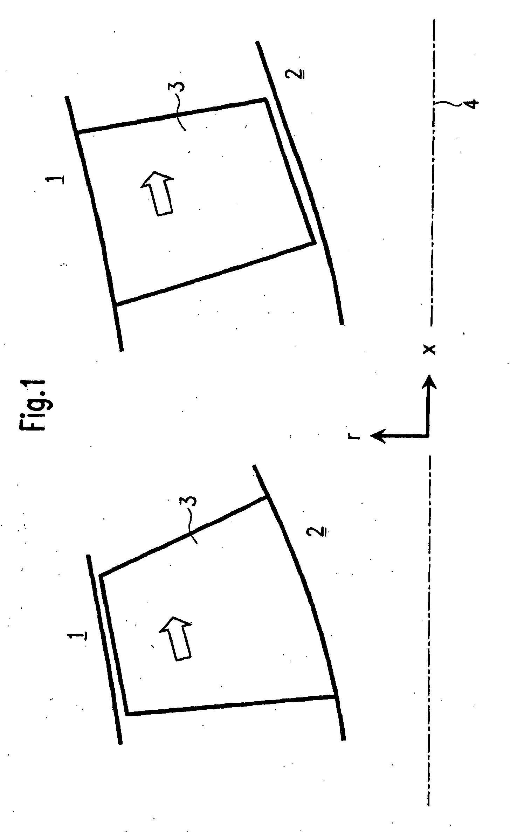

Die Fig. 1 zeigt in schematischer Darstellung die zwei erfindungsrelevanten Schaufelkonfigurationen in der durch die Radialrichtung r und die Axialrichtung x gegebenen Meridianebene. Zum einen betrifft die Erfindung einen Rotor mit fester Anbindung an der Nabe 2 und einem freien Schaufelende mit Radialspalt am Gehäuse 1. In analoger Weise betrifft die Erfindung einen Stator, der gehäuseseitig eine feste Verbindung zum Rand aufweist und nabenseitig ein freies Schaufelende mit Radialspalt besitzt. Wie in allen hier gezeigten Darstellungen erfolgt die Zuströmung der betreffenden Schaufelreihe, wie durch den dicken Pfeil angedeutet, von links nach rechts.

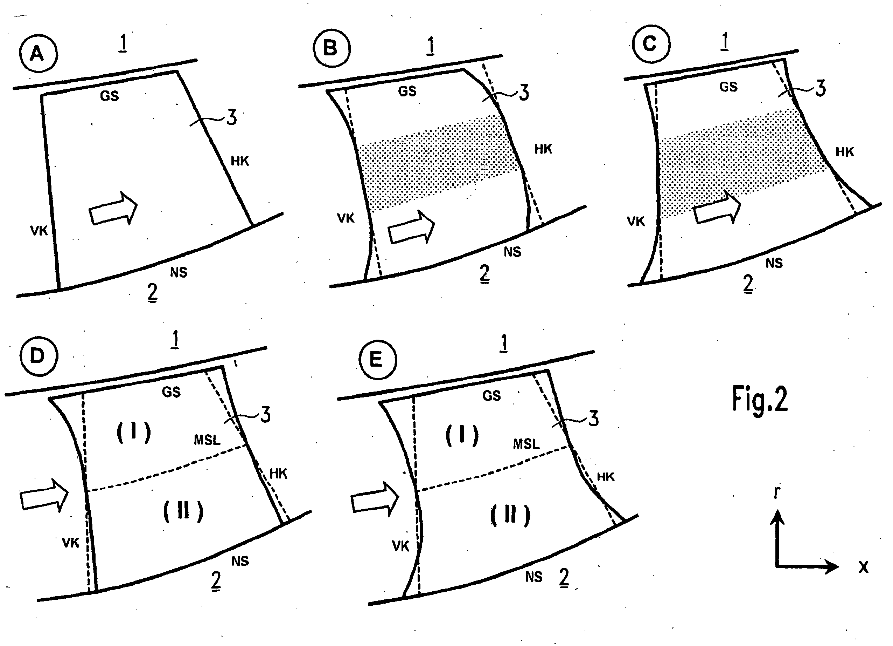

Die Fig. 2 zeigt in stark vereinfachter Darstellung den Stand der Technik und erfindungsgemäße Lösungen in der von Radialrichtung r und Axialrichtung x gegebenen Meridianebene. Die Darstellung zeigt hier beispielhaft einen Rotor, in analoger Weise wäre jedoch die Darstellung am Stator ebenso möglich (hierzu müssten lediglich das freie und das feste Schaufelende die Positionen tauschen). Das Teilbild -A- zeigt eine konventionelle Rotorschaufel mit einer in dieser Perspektive typischerweise in Richtung des Gehäuses 1 abnehmenden Profiltiefe. Eine weitere übliche Ausführung besteht in einer axial gekrümmten Schaufelform, die durch eine stromaufwärts gerichtete Verschiebung der Randprofilschnitte entsteht (Teilbild -B-). Dabei bleibt jedoch ein breiter, mittlerer Bereich der Schaufel in seiner ursprünglichen Form erhalten. Ebenfalls Stand der Technik sind nicht weiter in Zusammenhang gebrachte Verlängerungen der Schaufel 3 im Randbereich der Vorder- und Hinterkante (Teilbild -C-). Auch hier existiert ein weiter mittlerer Bereich unveränderter Profilschnitte.

Um eine hohe Wirksamkeit von Profiltiefenerweiterungen zu erreichen, ist eine ausgewogene Kombination aus Verschiebung und Verlängerung der einzelnen Profilschnitte, insbesondere des spaltangrenzenden Profilschnitts, notwendig, siehe Teilbilder -D- und -E-. Voraussetzung ist die Einhaltung der erfindungsgemäßen Profiltiefenerweiterung in einem die gesamte an den Spalt angrenzende Schaufelhälfte umfassenden Bereich (I). Die mittlere Stromlinie MSL trennt den Bereich (I) vom Bereich (II), der erfindungsgemäß (lokal oder gänzlich) eine Profiltiefenreduzierung oder auch eine Profiltiefenerweiterung aufweisen darf.

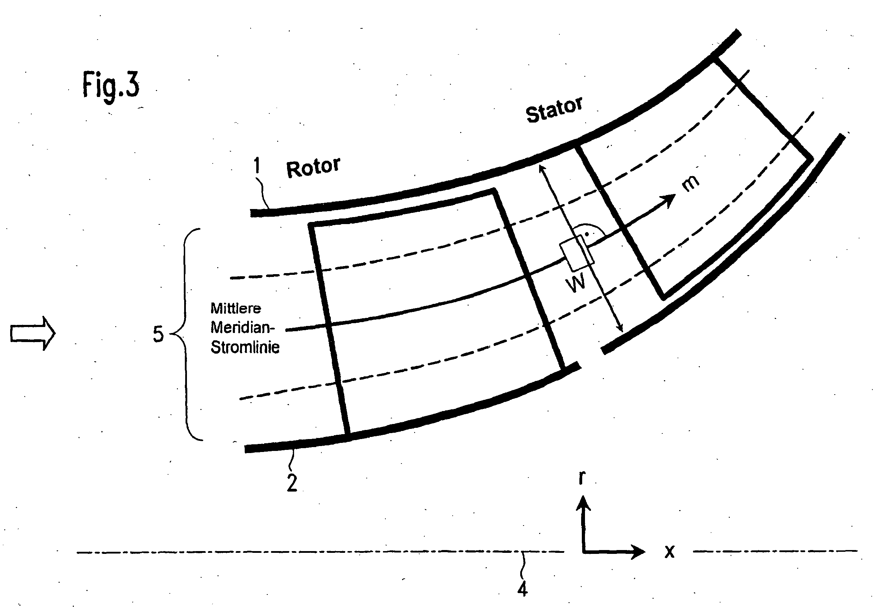

Die Fig. 3 gibt eine genaue Definition der Meridianstromlinien und der Stromlinienschnitte. Die mittlere Meridianstromlinie wird durch die geometrische Mitte des Ringkanals gebildet. Errichtet man an jedem Ort der mittleren Stromlinie eine Normale, so erhält man zum einen den Verlauf der Ringkanalweite W entlang des Strömungspfades und zum anderen eine Anzahl von Normalen, mit deren Hilfe sich bei gleicher relativer Unterteilung in Richtung der Kanalhöhe weitere Meridianstromlinien ergeben. Der Schnitt einer Meridianstromlinie mit einer Schaufel ergibt einen Stromlinienprofilschnitt.

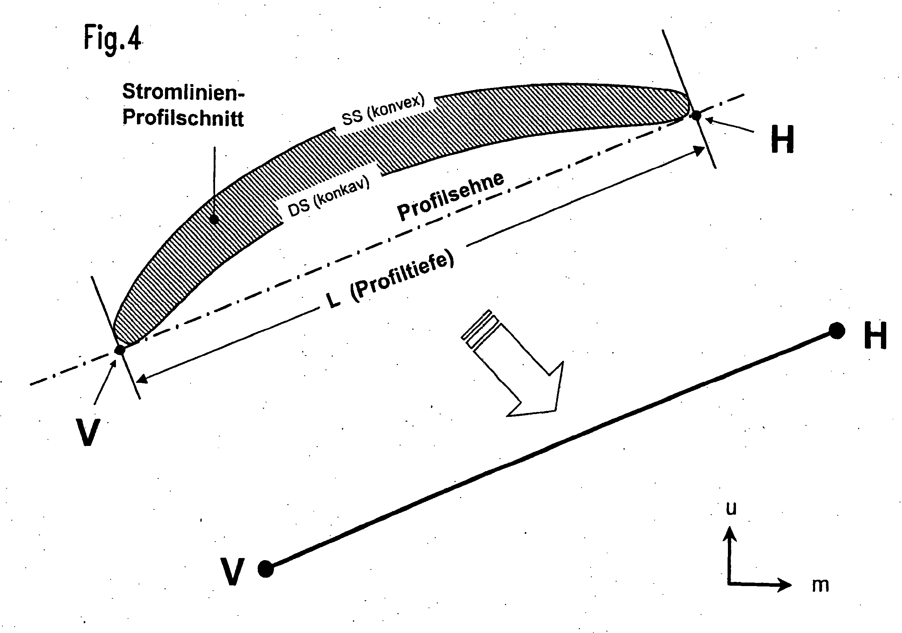

Die Fig. 4 zeigt einen solchen Stromlinienprofilschnitt, bestehend aus Vorderkante, einer konvexen Seite (Saugseite), einer konkaven Seite (Druckseite) und der Hinterkante. Die druckseitig an das Profil angelegte Tangente bezeichnet man als Profilsehne. Durch zwei senkrecht auf der Profilsehne stehende Tangenten an Vorder- und Hinterkante ergeben sich durch Schnitt mit der Sehne die beiden Endpunkte V und H, zwischen denen schließlich die Profiltiefe L liegt. Zur vereinfachenden, aber hinreichenden Darstellung der erfindungsgemäßen Lösung wird im Weiteren lediglich der von V und H begrenzte Abschnitt der Profilsehne zur Repräsentierung von Schaufelschnitten herangezogen.

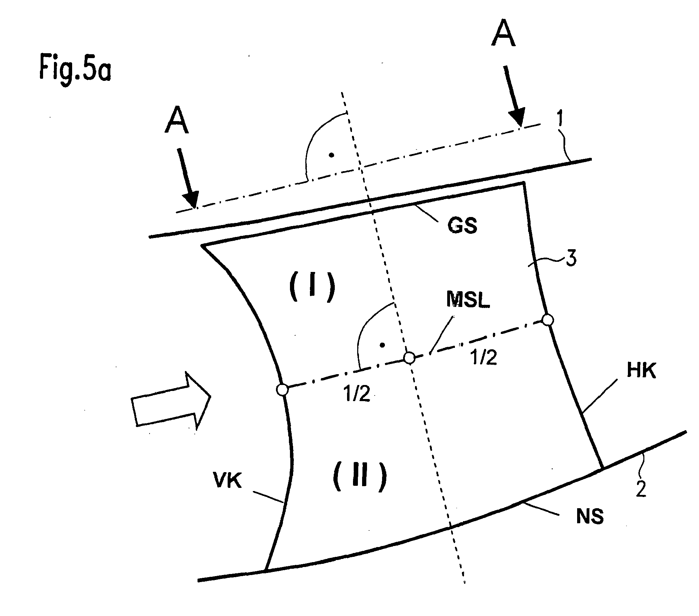

Die Fig. 5a zeigt die erfindungsgemäße Lösung an einem Rotor, gebildet durch den Nabenschnitt NS, den Gehäuseschnitt GS, die Vorderkante VK und die Hinterkante HK. Ebenfalls eingezeichnet ist die mittlere Meridianstromlinie MSL. Die Anströmung erfolgt von links. Diese Ansicht dient im Wesentlichen der Verdeutlichung der Schaufelform und der Definition der Ansicht A-A. Letztere erfolgt parallel zu einer mittig zwischen Vorderkante und Hinterkante auf der MSL errichteten und in der Meridianebene (x, r) liegenden Normalen. In dieser Ansicht erfasst man alle Profilschnitte einer Schaufel bei nahezu maximaler Flächenprojektion. Die Zuordnung der Schnitte zueinander lässt sich so besonders klar zeigen.

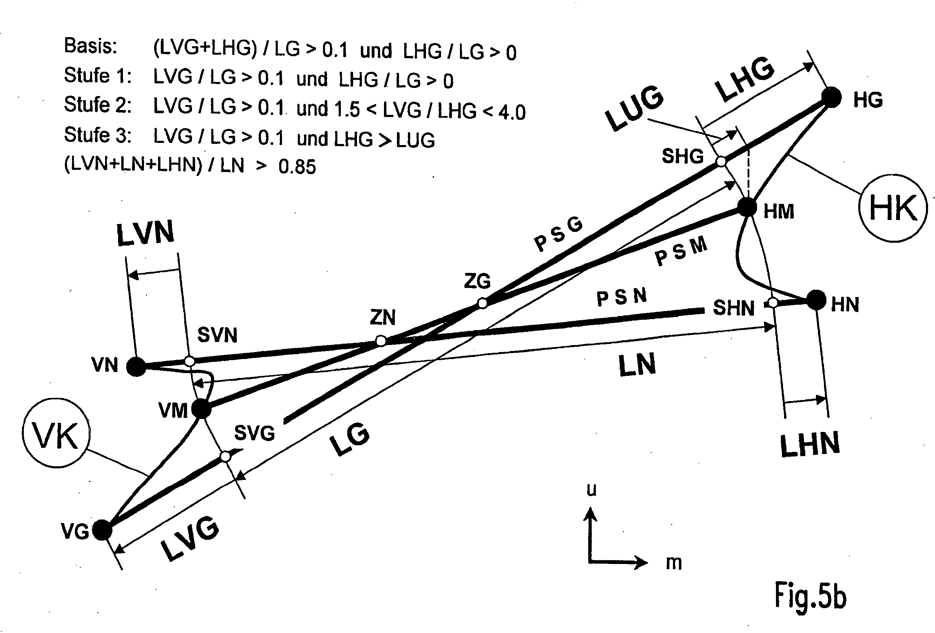

In der Fig. 5b sind gemäß der vereinbarten Vereinfachung drei Stromlinienprofilschnitte der Schaufel dargestellt. Es handelt sich dabei um den Nabenprofilschnitt PSN, den mittleren Profilschnitt PSM und den in Gehäusenähe befindlichen Schaufelspitzenschnitt am Radialspalt PSG. Die drei Profilschnitte besitzen die Vorder- und Hinterkantenpunkte (VN, HN), (VM, HM) und (VG, HG). Die Sehne des PSN und des PSM schneiden sich im Punkt ZN. Der Punkt ZN ist der Mittelpunkt zweier Kreisbögen, von denen der eine vom Vorderkantenpunkt VM zum Schnittpunkt SVN und der andere vom Hinterkantenpunkt HM zum Schnittpunkt SHN führt. Die Sehne des PSG und des PSM schneiden sich im Punkt ZG. Der Punkt ZG ist der Mittelpunkt zweier Kreisbögen, von denen der eine vom Vorderkantenpunkt VM zum Schnittpunkt SVG und der andere vom Hinterkantenpunkt HM zum Schnittpunkt SHG führt.

Die Punkte (SVN, VM, SVG) und (SHN, HM, SHG) sowie die dazwischen konstruierten Kreisbögen beschreiben die Begrenzungen des zur Quantifizierung der erfindungsgemäßen Profiltiefenerweiterung notwendigen Schaufelbasisbereiches.

Betrachtet man zunächst den gehäusenahen Profilschnitt PSG, so lassen sich nun die dortigen Profiltiefenerweiterungen LVG und LHG sowie die Zentrallänge LG ermitteln. Erfindungsgemäß ist die Profiltiefenerweiterung im gehäusenahen Profilschnitt am Spalt PSG durch folgende Relationen festgelegt: (LVG+LHG) / LG > 0.1 und LHG / LG > 0.

Eine vorteilhafte Ausgestaltung der erfindungsgemäßen Lösung erhält man bei Zugrundelegung einer großen Profiltiefenerweiterung an der Vorderkante nach folgenden Entwurfsregeln: LVG / LG > 0.1 und LHG / LG > 0.

Eine weiter vorteilhafte Ausgestaltung der erfindungsgemäßen Lösung erhält man bei Zugrundelegung einer großen Profiltiefenerweiterung an der Vorderkante und eine Zuordnung einer Profiltiefenerweiterung an der Hinterkante nach folgenden Regeln: LVG / LG > 0.1 und 1.5 < LVG / LHG < 4.0.

Eine besonders vorteilhafte Ausgestaltung der erfindungsgemäßen Lösung erhält man bei Zugrundelegung einer großen Profiltiefenerweiterung an der Vorderkante und eine Dimensionierung der Profiltiefenerweiterung an der Hinterkante über die meridionale Position der Mittelschnittshinterkante hinaus: LVG / LG > 0.1 und LHG > LUG.

In allen Fällen muss erfindungsgemäß das Maß der Profiltiefenerweiterung in dem spaltangrenzenden Schaufelbereich (I) an Vorder- und Hinterkante zwischen dem PSG und dem PSM durchgehend positive Beträge besitzen und im PSM auf Null zurückgehen. Dies ist daran festzumachen, dass die Verläufe der Hinterkante und der Vorderkante im Bereich I keinen Schnittpunkt mit den Begrenzungen des Schaufelbasisbereiches bilden.

Betrachtet man den Nabenprofilschnitt PSN, so lassen sich die dortigen Profiltiefenerweiterungen LVN und LHN sowie die Zentrallänge LN ermitteln. Erfindungsgemäß ist die Profiltiefenerweiterung im Nabenprofilschnitt PSN durch folgende Relation festgelegt: (LVN+LN+LHN) / LN > 0.85.

Das Maß der Profiltiefenerweiterung kann folglich in dem nabenangrenzenden Schaufelbereich (II) an Vorder- und Hinterkante positive, aber auch negative Beträge besitzen (Profiltiefenreduzierung), muss aber im PSM auf Null zurückgehen.

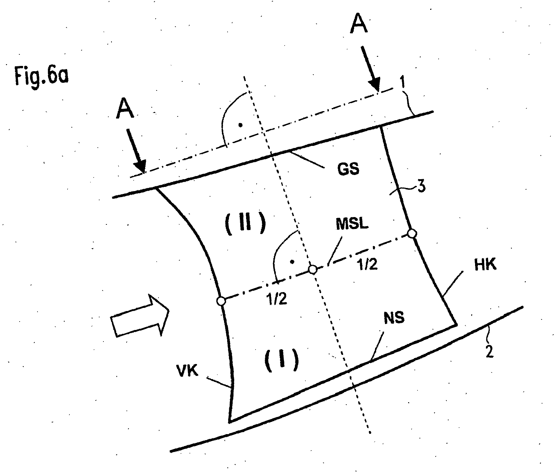

Die Fig. 6a zeigt die erfindungsgemäße Lösung an einem Stator, gebildet durch den Nabenschnitt NS, den Gehäuseschnitt GS, die Vorderkante VK und die Hinterkante HK. Ebenfalls eingezeichnet ist die mittlere Meridianstromlinie MSL. Die Anströmung erfolgt von links. Diese Ansicht dient im Wesentlichen der Verdeutlichung der Schaufelform und der Definition der Ansicht A-A. Letztere erfolgt parallel zu einer mittig zwischen Vorderkante und Hinterkante auf der MSL errichteten und in der Meridianebene (x, r) liegenden Normalen.

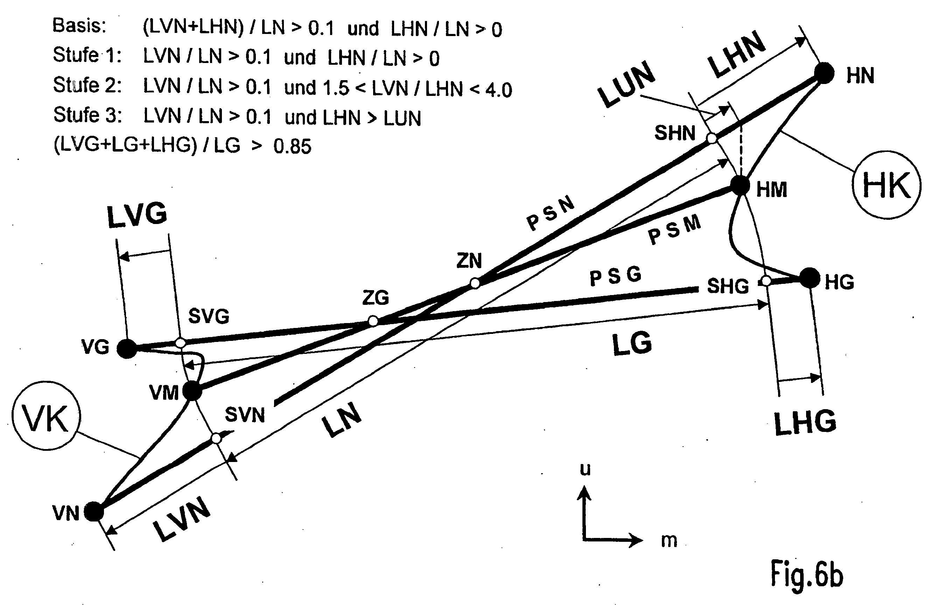

In der Fig.6b sind ganz analog zu Fig. 5b drei Stromlinienprofilschnitte der Schaufel dargestellt. Es handelt sich dabei um den in Nabennähe befindlichen Profilschnitt am Radialspalt PSN, den mittleren Profilschnitt PSM und den Gehäuseprofilschnitt PSG. Die drei Profilschnitte besitzen die Vorder- und Hinterkantenpunkte (VN, HN), (VM, HM) und (VG, HG). Die Sehne des PSG und des PSM schneiden sich im Punkt ZG. Der Punkt ZG ist der Mittelpunkt zweier Kreisbögen, von denen der eine vom Vorderkantenpunkt VM zum Schnittpunkt SVG und der andere vom Hinterkantenpunkt HM zum Schnittpunkt SHG führt. Die Sehne des PSN und des PSM schneiden sich im Punkt ZN. Der Punkt ZN ist der Mittelpunkt zweier Kreisbögen, von denen der eine vom Vorderkantenpunkt VM zum Schnittpunkt SVN und der andere vom Hinterkantenpunkt HM zum Schnittpunkt SHN führt. Die Punkte (SVN, VM, SVG) und (SHN, HM, SHG) sowie die dazwischen konstruierten Kreisbögen beschreiben die Begrenzungen des zur Quantifizierung der erfindungsgemäßen Profiltiefenerweiterung notwendigen Schaufelbasisbereiches.

Betrachtet man zunächst den nabennahen Profilschnitt PSN, so lassen sich nun die dortigen Profiltiefenerweiterungen LVN und LHN sowie die Zentrallänge LN ermitteln.

Erfindungsgemäß ist die Profiltiefenerweiterung im nabennahen Profilschnitt am Spalt PSN durch folgende Relationen festgelegt: (LVN+LHN) / LN > 0.1 und LHN / LN > 0.

Eine vorteilhafte Ausgestaltung der erfindungsgemäßen Lösung erhält man bei Zugrundelegung einer großen Profiltiefenerweiterung an der Vorderkante nach folgenden Regeln: LVN / LN > 0.1 und LHN / LN > 0.

Eine weitere vorteilhafte Ausgestaltung der erfindungsgemäßen Lösung erhält man bei Zugrundelegung einer großen Profiltiefenerweiterung an der Vorderkante und eine Zuordnung einer Profiltiefenerweiterung an der Hinterkante nach folgenden Regeln: LVN / LN > 0.1 und 1.5 < LVN / LHN < 4.0.

Eine besonders vorteilhafte Ausgestaltung der erfindungsgemäßen Lösung erhält man bei Zugrundelegung einer großen Profiltiefenerweiterung an der Vorderkante und eine Dimensionierung der Profiltiefenerweiterung an der Hinterkante über die meridionale Position der Mittelschnittshinterkante hinaus: LVN / LN > 0.1 und LHN > LUN.

In allen Fällen muss erfindungsgemäß das Maß der Profiltiefenerweiterung in dem spaltangrenzenden Schaufelbereich (I) an Vorder- und Hinterkante zwischen dem PSN und dem PSM durchgehend positive Beträge besitzen und im PSM auf Null zurückgehen. Dies ist daran festzumachen, dass die Verläufe der Hinterkante und der Vorderkante im Bereich (I) keinen Schnittpunkt mit den Begrenzungen des Schaufelbasisbereiches bilden.

Betrachtet man den Gehäuseprofilschnitt PSG, so lassen sich die dortigen Profiltiefenerweiterungen LVG und LHG sowie die Zentrallänge LG ermitteln.

Erfindungsgemäß ist die Profiltiefenerweiterung im Gehäuseprofilschnitt PSG durch folgende Relation festgelegt: (LVG+LG+LHG) / LG > 0.85.

Das Maß der Profiltiefenerweiterung kann folglich in dem gehäuseangrenzenden Schaufelbereich (II) an Vorder- und Hinterkante positive, aber auch negative Beträge besitzen (Profiltiefenreduzierung), muss aber im PSM auf Null zurückgehen.

Bei der erfindungsgemäßen Schaufel für Strömungsarbeitsmaschinen wie Bläser, Verdichter, Pumpen und Ventilatoren wird eine Randströmungsbeeinflussung erzielt, die bei gleicher Stabilität den Wirkungsgrad einer jeden Stufe um etwa 1 % erhöhen kann. Zudem ist eine Reduzierung der Schaufelzahlen von bis zu 20 % möglich. Das erfindungsgemäße Konzept ist bei unterschiedlichen Arten von Strömungsarbeitsmaschinen anwendbar und führt je nach Ausnutzungsgrad des Konzeptes zu Reduktionen der Kosten und des Gewichts für die Strömungsarbeitsmaschine von 2 % bis 10 %. Hinzu kommt eine Verbesserung des Gesamtwirkungsgrades der Strömungsarbeitsmaschine, je nach Anwendungsfall, von bis zu 1, 5 %.

Bezugszeichenliste

1   Gehäuse
2   Nabe
3   Schaufel
4   Maschinenachse
5   Ringkanal

**Patentansprüche**

**1.** Strömungsmaschine,

- mit einem durch ein Gehäuse (1) und eine Nabe (2) gebildeten Ringkanal (5), und

- mit einer mittleren Meridianstromlinie (MSL), die durch die geometrische Mitte des Ringkanals (5) gebildet wird,
- mit einer Schaufel (3),
- wobei die Schaufel eine Rotorschaufel ist, die eine feste Anbindung an der Nabe (2) und ein freies Schaufelende mit Radialspalt am Gehäuse (1) aufweist, oder eine Statorschaufel ist, die gehäuseseitig eine feste Verbindung zum Rand aufweist und nabenseitig ein freies Schaufelende mit Radialspalt besitzt,
- wobei der Schnitt einer Meridianstromlinie mit der Schaufel einen Stromlinienprofilschnitt ergibt,
- mit einem ersten spaltangrenzenden Schaufelbereich (I), der sich zwischen einer mittleren Meridianstromlinie (MSL) der Schaufel und dem freien Schaufelende erstreckt, und
- mit einem naben- bzw. gehäuseangrenzenden zweiten Schaufelbereich (II), der sich zwischen der mittleren Meridianstromlinie (MSL) der Schaufel (3) und dem festen Schaufelende erstreckt,
- wobei in einer Schnittansicht der Schaufel parallel zu einer mittig zwischen der Vorderkante (VK) und der Hinterkante (HK) auf der mittleren Meridianstromlinie (MSL) errichteten und in einer Meridianebene (x, r) liegenden Normalen für eine Rotorschaufel die Projektion des Stromlinienprofilschnitts an der Nabe (PSN), die Projektion des Stromlinienprofilschnitts an der mittleren Meridianstromlinie (PSM) und die Projektion des Stromlinienprofilschnitts des in Gehäusenähe befindlichen Schaufelspitzenschnitts am Radialspalt (PSG), festgelegt werden, und für eine Statorschaufel die Projektion des Stromlinienprofilschnitts an der mittleren Meridianstromlinie (PSM), die Projektion des Stromlinienprofilschnitts des in Nabennähe befindlichen Profilschnitts am Radialspalt (PSN), und die Projektion des Stromlinienprofilschnitts am Gehäuseprofilschnitt (PSG) festgelegt werden,
- wobei die Schaufel (3) gegeben ist durch Stromlinienprofilschnitte mit einer Vorderkante (VK) und einer Hinterkante (HK), welche jeweils durch eine senkrecht auf der Profilsehne stehende Tangente im Schnitt mit der Profilsehne einen vorderen Endpunkt (V) und einen hinteren Endpunkt (H) bilden, deren Abstand zueinander die Profiltiefe (L) bildet,
- wobei der erste Schaufelbereich (I) am freien Schaufelende eine Profiltiefenerweiterung aufweist, welche bezogen auf die Projektion des Stromlinienprofilschnitts (PSM) an der mittleren Meridianstromlinie (MSL) mindestens 10% beträgt und bei stets positiven Beträgen auf Null in der Projektion des Stromlinienprofilschnitts (PSM) an der mittleren Meridianstromlinie (MSL) zurückgeht,
- wobei das Maß der Profiltiefenerweiterung in dem ersten Schaufelbereich (I) an der Vorderkante (VK) und der Hinterkante (HK) durchgehend positive Beträge aufweist und in der Projektion des Stromlinienprofilschnitts (PSM) an der mittleren Meridianstromlinie (MSL) auf Null zurückgeht,
- wobei die an der Hinterkante (HK) auftretende Profilerweiterung im spaltangrenzenden Randschnitt größer als Null ist, **dadurch gekennzeichnet, dass** die Profiltiefenerweiterung an dem gesamten spaltangrenzenden Schaufelbereich (I) ausgebildet ist.

**2.** Strömungsmaschine nach Anspruch 1, **dadurch gekennzeichnet, dass** der zweite Schaufelbereich (II) über seine gesamte Höhe bezüglich der Projektion des Stromlinienprofilschnitts (PSM) an der mittleren Meridianstromlinie (MSL) mit einer Profiltiefenerweiterung oder einer Profiltiefenreduzierung versehen ist, wobei das Maß der Profiltiefenerweiterung in dem zweiten Schaufelbereich (II) an der Vorderkante (VK) und der Hinterkante (HK) positive oder negative Beträge aufweist und im Stromlinienprofilschnitt an der mittleren Stromlinie (PSM) auf Null zurückgeht.

**3.** Strömungsmaschine nach Anspruch 1 oder 2, **dadurch gekennzeichnet, dass** die Profiltiefenerweiterung am freien Ende an der Vorderkante (VK) mindestens 10% beträgt.

**4.** Strömungsmaschine nach einem der Ansprüche 1 bis 3, **dadurch gekennzeichnet, dass** die Profiltiefenerweiterung am freien Schaufelende an der Vorderkante (VK), bezogen auf die Profiltiefenerweiterung an der Hinterkante (HK) ein Verhältnis von 1,5 bis 4,0 ergibt.

**5.** Strömungsmaschine nach einem der Ansprüche 1 bis 4, **dadurch gekennzeichnet, dass** die Profiltiefenerweiterung am freien Schaufelende auf einen Hinterkantenpunkt (HN, HG) führt, der in Meridianrichtung betrachtet weiter stromabwärts angeordnet ist, als der Hinterkantenpunkt (HM) des Mittelschnitts.

**6.** Strömungsmaschine nach einem der Ansprüche 1 bis 5, wobei:

- die Projektion der Stromlinienprofilschnitte an der Nabe (PSN), an der mittleren Meridianstromlinie (PSM) und am Radialspalt (PSG) Vorder- und Hinterkantenpunkte (VN, HN), (VM, HM) und (VG, HG) besitzen;
- die (PSN) und die (PSM) sich im Punkt (ZN) schneiden; der Punkt (ZN) ist der Mittelpunkt zweier Kreisbögen, von denen der eine vom Vorderkantenpunkt (VM) zum Schnittpunkt (SVN) an der (PSN) und der andere vom Hinterkantenpunkt (HM) zum Schnittpunkt (SHN) an der (PSN) führt;
- die (PSG) und die (PSM) sich im Punkt (ZG) schneiden; der Punkt (ZG) ist der Mittelpunkt zweier Kreisbögen, von denen der eine vom Vorderkantenpunkt (VM) zum Schnittpunkt (SVG) an der (PSG) und der andere vom Hinterkantenpunkt (HM) zum Schnittpunkt (SHG) an der (PSG) führt;
- der Abstand zwischen (VN) und (SVN) als (LVN) bezeichnet wird,
- der Abstand zwischen (HN) und (SHN) als (LHN) bezeichnet wird,
- der Abstand zwischen (SVN) und (SHN) als (LN) bezeichnet wird,
- der Abstand zwischen (VG) und (SVG) als (LVG) bezeichnet wird,
- der Abstand zwischen (HG) und (SHG) als (LHG) bezeichnet wird,
- der Abstand zwischen (SVG) und (SHG) als (LG) bezeichnet wird, **dadurch gekennzeichnet, dass** die Profiltiefenerweiterung im Stromlinienprofilschnitt an der Nabe (PSN) für eine Rotorschaufel durch folgende Gleichung festgelegt ist:

$$(LVN+LN+LHN) \, / \, LN > 0.85.$$

**7.** Strömungsmaschine nach Anspruch 6, **dadurch gekennzeichnet, dass** die Profiltiefenerweiterung im Stromlinienprofilschnitt am Gehäuse (PSG) für eine Statorschaufel durch folgende Gleichung festgelegt ist:

$$(LVG+LG+LHG) \, / \, LG > 0.85.$$

**Claims**

**1.** Fluid flow machine,

- with an annulus (5) formed by a casing (1) and a hub (2),
- with a mean meridional flow line (MSL) established by the geometrical center of the annulus (5), and
- with a blade (3),
- where the blade is a rotor blade with firm attachment at the hub (2) and a free blade end with radial gap at the casing (1), or a stator blade, which on the casing side is firmly attached peripherally and has a free blade end with radial gap on the hub side,
- where the intersection of a meridional flow line with the blade produces a flow line profile section,
- with a first gap-adjoining blade area (I), extending between a mean meridional flow line (MSL) of the blade and the free blade end, and
- with a hub or casing-adjoining second blade area (II) extending between the mean meridional flow line (MSL) of the blade (3) and the fixed blade end,
- where, in a sectional view of the blade parallel to a normal erected centrally between the leading edge (VK) and the trailing edge (HK) on the mean meridional flow line (MSL) and situated in a meridional plane (x, r), are established for a rotor blade the projection of the flow line profile section at the hub (PSN), the projection of the flow line profile section at the mean meridional flow line (PSM) and the projection of the flow line profile section of the casing-near blade tip section at the radial gap (PSG), and for a stator blade the projection of the flow line profile section at the mean meridional flow line (PSM), the projection of the flow line profile section of the hub-near profile section at the radial gap (PSN) and the projection of the flow line profile section at the casing profile section (PSG),
- where the blade (3) is defined by the flow line profile sections with a leading edge (VK) and a trailing edge (HK), each producing by a tangent perpendicular to the profile chord and intersecting with the profile chord a front end point (V) and a rear end point (H), the distance between the end points defining the profile depth (L),
- where the first blade area (I) at the free blade end has a profile depth enlargement, which relative to the projection of the flow line profile section (PSM) at the mean meridional flow line (MSL) is at least 10 %, and with positive values throughout falls to zero in the projection of the flow line profile section (PSM) at the mean meridional flow line (MSL),
- where the degree of the profile depth enlargement in the first blade area (I) at the leading edge (VK) and at the trailing edge (HK) is positive throughout and falls to zero in the projection of the flow line profile section (PSM) at the mean meridional flow line (MSL),
- where the profile enlargement at the trailing edge (HK) in the gap-adjoining peripheral section is more than zero, **characterized in that** the profile depth enlargement is provided in the entire gap-adjoining blade area.

2. Fluid flow machine in accordance with Claim 1, **characterized in that** the second blade area (II) is provided with a profile depth enlargement <u>or a profile depth reduction</u> over its entire height relative to the projection of the flow line profile section (PSM) at the mean meridional flow line (MSL), where the degree of the profile depth enlargement in the second blade area (II) at the leading edge (VK) and at the trailing edge (HK) is <u>positive or</u> negative and falls to zero in the flow line profile section at the mean flow line (PSM).

3. Fluid flow machine in accordance with Claim 1 or 2, **characterized in that** the profile depth enlargement at the free end at the leading edge (VK) is at least 10 %.

4. Fluid flow machine in accordance with one of the Claims 1 to 3, **characterized in that** the ratio of the profile depth enlargement at the free blade end at the leading edge (VK) to the profile depth enlargement at the trailing edge (HK) is 1.5 to 4.0.

5. Fluid flow machine in accordance with one of the Claims 1 to 4, **characterized in that** the profile depth enlargement at the free blade end leads to a trailing edge point (HN, HG) which, as viewed in the meridional direction, is further downstream than the trailing edge point (HM) of the central section.

6. Fluid flow machine in accordance with one of the Claims 1 to 5, where

- the projections of the flow line profile sections at the hub (PSN), at the mean meridional flow line (PSM) and at the radial gap (PSG) have leading and trailing edge points (VN, HN), (VM, HM) and (VG, HG);
- (PSN) and (PSM) intersect in point (ZN); point (ZN) is the center of two circular arcs, one of them leading from the leading edge point (VM) to the point of intersection (SVN) at the (PSN) and the other one leading from the trailing edge point (HM) to the point of intersection (SHN) at the (PSN);
- (PSG) and (PSM) intersect in point (ZG); point (ZG) is the center of two circular arcs, one of them leading from the leading edge point (VM) to the point of intersection (SVG) at the (PSG) and the other one leading from the trailing edge point (HM) to the point of intersection (SHG) at the (PSG);
- the distance between (VN) and (SVN) is designated (LVN),
- the distance between (HN) and (SHN) is designated (LHN),
- the distance between (SVN) and (SHN) is designated (LN),
- the distance between (VG) and (SVG) is designated (LVG),

- the distance between (HG) and (SHG) is designated (LHG),
- the distance between (SVG) and (SHG) is designated (LG), **characterized in that** the profile depth enlargement in the flow line profile section at the hub (PSN) for a rotor blade is defined by the following equation:

$$(LVN + LN + LHN) / LN > 0.85.$$

7. Fluid flow machine in accordance with Claim 6, **characterized in that** the profile depth enlargement in the flow line profile section at the casing (PSG) for a stator blade is defined by the following equation:

$$(LVG + LG + LHG) / LG > 0.85.$$

## Revendications

1. Machine à écoulement

- avec un canal annulaire (5) formé par un carter (1) et un moyeu (2),
- avec une ligne d'écoulement méridienne centrale (MSL) qui est formée par le centre géométrique du canal annulaire (5), et
- avec une aube (3),
- sachant que l'aube est une aube de rotor qui présente une attache ferme sur le moyeu (2) et une extrémité d'aube libre avec interstice radial sur le carter (1), ou est une aube de stator qui possède du côté carter une attache ferme vers le bord et du côté moyeu une extrémité d'aube libre avec interstice radial,
- sachant que la coupe d'une ligne d'écoulement méridienne avec l'aube donne une section du profil de la ligne d'écoulement,
- avec une première zone d'aube (I) voisine de l'interstice, qui s'étend entre une ligne d'écoulement méridienne centrale (MSL) de l'aube et l'extrémité d'aube libre, et
- avec une seconde zone d'aube (II) voisine du moyeu ou du carter, qui s'étend entre la ligne d'écoulement méridienne centrale (MSL) de l'aube (3) et l'extrémité d'aube fixe,
- sachant que dans une vue en coupe de l'aube parallèlement à une normale élevée au milieu entre le bord d'attaque (VK) et le bord de fuite (HK) sur la ligne d'écoulement méridienne centrale (MSL) et située dans un plan méridien (x, r), la projection de la section du profil de la ligne d'écoulement sur le moyeu (PSN), la projection de la section du profil de la ligne d'écoulement sur la ligne d'écoulement méridienne centrale (PSM) et la projection de la section du profil de la ligne d'écoulement de la section du bout d'aube voisine du carter à l'interstice radial (PSG) sont définies pour une aube de rotor, et la projection de la section du profil de la ligne d'écoulement sur la ligne d'écoulement méridienne centrale (PSM), la projection de la section du profil de la ligne d'écoulement de la section du profil voisine du moyeu à l'interstice radial (PSN) et la projection de la section du profil de la ligne d'écoulement sur la section du profil du carter (PSG) sont définies pour une aube de stator,
- sachant que l'aube (3) est donnée par des sections du profil de la ligne d'écoulement avec un bord d'attaque (VK) et un bord de fuite (HK), lesquels par respectivement une tangente perpendiculaire à la corde de profil forment à l'intersection avec la corde de profil un point final d'attaque (V) et un point final de fuite (H), dont la distance qui les sépare constitue la profondeur de profil (L),
- sachant que la première zone d'aube (I) présente à l'extrémité d'aube libre une extension de profondeur de profil qui, par rapport à la projection de la section du profil de la ligne d'écoulement (PSM) sur la ligne d'écoulement méridienne centrale (MSL), s'élève à au moins 10 %, et avec des valeurs constamment positives retombe à zéro dans la projection de la section du profil de la ligne d'écoulement (PSM) sur la ligne d'écoulement méridienne centrale (MSL),
- sachant que la mesure de l'extension de profondeur de profil dans la première zone d'aube (I) sur le bord d'attaque (VK) et le bord de fuite (HK) présente constamment des valeurs positives, et retombe à zéro dans la projection de la section du profil de la ligne d'écoulement (PSM) sur la ligne d'écoulement méridienne centrale (MSL),
- sachant que l'extension de profil ayant lieu sur le bord de fuite (HK) est supérieure à zéro dans la section de bord voisine de l'interstice, **caractérisée en ce que** l'extension de profondeur de profil est formée sur la totalité de la zone d'aube (I) voisine de l'interstice.

2. Machine à écoulement selon la revendication n° 1, **caractérisée en ce que** sur l'intégralité de sa hauteur, la seconde zone d'aube (II) est munie d'une extension de profondeur de profil ou d'une réduction de profondeur de profil par rapport à la projection de la section du profil de la ligne d'écoulement (PSM) sur la ligne d'écoulement méridienne centrale (MSL), sachant que la mesure de l'extension de profondeur de profil dans la deuxième zone d'aube (II) sur le bord d'attaque (VK) et le bord de fuite (HK)

présente des valeurs <u>positives ou</u> négatives et retombe à zéro dans la section du profil de la ligne d'écoulement sur la ligne d'écoulement méridienne (PSM).

3. Machine à écoulement selon la revendication n° 1 ou n° 2, **caractérisée en ce que** l'extension de profondeur de profil à l'extrémité libre sur le bord d'attaque (VK) s'élève à au moins 10 %.

4. Machine à écoulement selon une des revendications n° 1 à n° 3, **caractérisée en ce que** le rapport entre l'extension de profondeur de profil à l'extrémité d'aube libre sur le bord d'attaque (VK) et l'extension de profondeur de profil sur le bord de fuite (HK) est compris entre 1,5 et 4,0.

5. Machine à écoulement selon une des revendications n° 1 à n° 4, **caractérisée en ce que** l'extension de profondeur de profil à l'extrémité d'aube libre mène à un point de bord de fuite (HN, HG) qui, vu dans le sens méridien, est situé plus en aval que le point de bord de fuite (HM) de la section médiane.

6. Machine à écoulement selon une des revendications n° 1 à n° 5, dans laquelle

   - les projections des sections du profil de la ligne d'écoulement sur le moyeu (PSN), sur la ligne d'écoulement méridienne centrale (PSM) et sur l'interstice radial (PSG) présentent des points de bord d'attaque et de fuite (VN, HN), (VM, HM) et (VG, HG) ;
   - la (PSN) et la (PSM) se coupent au point (ZN) ; le point (ZN) est le centre de deux arcs de cercle, dont l'un mène du point de bord d'attaque (VM) au point d'intersection (SVN) sur la (PSN), et l'autre du point de bord de fuite (HM) au point d'intersection (SHN) sur la (PSN) ;
   - la (PSG) et la (PSM) se coupent au point (ZG) ; le point (ZG) est le centre de deux arcs de cercle, dont l'un mène du point de bord d'attaque (VM) au point d'intersection (SVG) sur la (PSG), et l'autre du point de bord de fuite (HM) au point d'intersection (SHG) sur la (PSG) ;
   - la distance entre (VN) et (SVN) est désignée par (LVN),
   - la distance entre (HN) et (SHN) est désignée par (LHN),
   - la distance entre (SVN) et (SHN) est désignée par (LN),
   - la distance entre (VG) et (SVG) est désignée par (LVG),
   - la distance entre (HG) et (SHG) est désignée par (LHG),
   - la distance entre (SVG) et (SHG) est désignée par (LG), **caractérisée en ce que** l'extension de profondeur de profil dans la section du profil de la ligne d'écoulement sur le moyeu (PSN) pour une aube de rotor est définie par l'équation suivante :

$$(LVN + LN + LHN) / LN > 0{,}85.$$

7. Machine à écoulement selon la revendication n° 6, **caractérisée en ce que** l'extension de profondeur de profil dans la section du profil de la ligne d'écoulement sur le carter (PSG) pour une aube de stator est définie par l'équation suivante :

$$(LVG + LG + LHG) / LG > 0{,}85.$$

Fig.1

Fig.2

Fig.3

**Fig.4**

Stromlinien-
Profilschnitt

SS (konvex)

DS (konkav)

Profilsehne

L (Profiltiefe)

V

H

V

H

u

m

EP 1 657 401 B1

Fig.5a

Basis: $(LVG+LHG) / LG > 0.1$ und $LHG / LG > 0$
Stufe 1: $LVG / LG > 0.1$ und $LHG / LG > 0$
Stufe 2: $LVG / LG > 0.1$ und $1.5 < LVG / LHG < 4.0$
Stufe 3: $LVG / LG > 0.1$ und $LHG > LUG$
$(LVN+LN+LHN) / LN > 0.85$

LVN
LHG
LUG
HG
SHG
HM
HK
PSG
PSM
ZG
ZN
PSN
SHN
HN
SVN
VN
LN
VM
LHN
SVG
VK
LG
VG
LVG

u
m

Fig.5b

EP 1 657 401 B1

Fig.6a

A

A

GS

(II)

MSL

1/2

1/2

NS

(I)

VK

HK

3

1

2

Basis:    (LVN+LHN) / LN > 0.1  und  LHN / LN > 0
Stufe 1:   LVN / LN > 0.1  und  LHN / LN > 0
Stufe 2:   LVN / LN > 0.1  und 1.5 < LVN / LHN < 4.0
Stufe 3:   LVN / LN > 0.1  und LHN > LUN
(LVG+LG+LHG) / LG  >  0.85

Fig.6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0661413 A1
- EP 1106835 A2
- EP 1106836 A2
- EP 0833060 A2
- EP 0833060 A
- FR 2053049 A